# EUROPEAN PATENT SPECIFICATION

(11) **EP 3 907 109 B1**
(45) Date of publication and mention of the grant of the patent: **27.11.2024**
(21) Application number: 19904043.7
(22) Date of filing: 24.12.2019
(51) Int. Cl.: B60R 13/00, G09F 13/04

(54) **VEHICLE LOGO ASSEMBLY AND VEHICLE**
FAHRZEUGLOGOANORDNUNG UND FAHRZEUG
ENSEMBLE LOGO DE VÉHICULE, ET VÉHICULE

(30) Priority: 27.12.2018 CN 201822222312 U
(43) Date of publication of application: 10.11.2021
(73) Proprietor: Valeo Vision, 93012 Bobigny Cedex (FR)
(72) Inventor: WU, Changqi, Foshan, Guangdong 528000 (CN); HE, Zhifeng, Foshan, Guangdong 528000 (CN); LIU, Lixian, Foshan, Guangdong 528000 (CN); LAI, Yonghui, Foshan, Guangdong 528000 (CN)
(74) Representative: Valeo Visibility
(86) International application number: PCT/CN2019/127713
(87) International publication number: WO 2020/135379

(56) References cited:
- WO-A1-2018/121855
- CN-A- 105 782 784
- CN-A- 108 602 469
- CN-A- 108 602 469
- CN-U- 209 650 187
- US-A1- 2011 052 839
- US-A1- 2011 052 839
- US-B1- 6 174 075
- US-B2- 9 784 427

## Description

### Technical Field

The present application relates to a vehicle logo assembly and a vehicle having the vehicle logo assembly.

### Background

Vehicle logo assemblies capable of emitting light are being used more and more in motor vehicles, in order to present a unique and attractive appearance.

For example, a light-emitting logo system is known from the document US6174075; this comprises a light-emitting device and a logo. The light-emitting device includes a polyvinyl chloride (PVC) plate and a light source device; the bottom of the PVC plate has a cavity for accommodating the light source device, the light source device comprises an LED and a power source, and the logo is attached to a surface of the PVC plate. When the light source device emits light, a light beam shines into the PVC plate and diffuses through it, thereby illuminating the logo attached to the surface thereof. A prior art example of a logo assembly corresponding to the preamble of claim 1 is disclosed in WO 2018/121855 A1.

### Summary Application

An object of the present application is to provide a vehicle logo assembly and a vehicle having the vehicle logo assembly, which can achieve a good display effect of the vehicle logo assembly in a cost-effective manner and with a simple structure.

According to one aspect of the present application, the object is achieved as follows: the vehicle logo assembly has a lens, a light source and a support, the light source being arranged in a space enclosed by the lens and the support, and a vehicle logo pattern being formed in the lens, wherein the lens comprises an outer lens and an inner lens superposed one on top of the other, a first coating is applied to that side of the outer lens which faces the inner lens, a second coating is applied to that side of the inner lens which faces the outer lens, and in an assembled state of the outer lens and inner lens, a light-transmitting part in the form of the vehicle logo pattern is formed between the first coating and the second coating. By arranging the vehicle logo pattern on coordinated contact faces of the inner lens and the outer lens, it is possible to prevent corrosion of component parts of the vehicle logo pattern, in particular made of metal, due to the influence of the external environment, e.g. moisture. In addition, this solution can also effectively protect the vehicle logo pattern, to prevent it from being scratched, and has a particularly good visual effect.

According to the invention, a depression is formed on that side of the outer lens which faces the inner lens, with the first coating being applied in a region other than the depression; and a protrusion is formed on that side of the inner lens which faces the outer lens, with the second coating being applied to a surface of the protrusion, wherein the depression and the protrusion are shape-fitted to each other, and the inner lens and the outer lens are in a close fit. This can ensure the precise positioning of the outer lens relative to the inner lens, and further simplifies assembly. In addition, in this embodiment, when applying the coating to the outer lens, a coating material can be effectively prevented from entering the depression undesirably by merely inserting a corresponding mold into the depression, thus enabling cost-effective manufacture.

The first coating is a paint layer, e.g. a black paint layer; the second coating is a water-electroplated layer, e.g. a silver-colored metal layer. The vehicle logo pattern itself is prominently presented due to the obvious color difference between the coatings. When the light source is lit, the light source penetrates and passes through the light-transmitting part, and this presents a good visual effect.

According to the present invention, the inner lens is a two-component injection-molded member, wherein a portion that forms the protrusion of the inner lens is formed of acrylonitrile butadiene styrene copolymer (ABS) or a mixture of ABS and polycarbonate (PC), and other portions are formed of other light-transmitting plastic (e.g. PC, polymethyl methacrylate (PMMA)). This is particularly suitable as the second coating applied to the protrusion is a water-electroplated layer; this material selection can ensure a good coating adhesion result.

According to the invention, the second coating is a metal plated layer, such as a metal chromium layer or a metal aluminum layer. In the case of a metal chromium layer, it is appropriate to select trivalent chromium, in order to meet environmental protection requirements.

According to an embodiment of the present invention, the first coating gradually becomes thinner in a direction toward the depression. This further prevents the incursion of coating material into a wall part forming the depression during the coating process.

According to an embodiment of the present application, a light diffusion plate is arranged between the light source and the lens. This is conducive to a uniform light output effect in all directions, especially when the light source is a point light source.

According to an embodiment of the present application, multiple light sources are provided, being arranged on a common printed circuit board. The light source may be a light emitting diode, and the color thereof can be freely selected according to needs, e.g. white, red, yellow or other colors.

According to an embodiment of the present application, a heat sink for the light source is provided, to further facilitate the dissipation of heat from the light source.

According to an embodiment of the present application, the thicknesses of the first coating and the second coating are 8-10 µm.

According to another aspect of the present application, a vehicle is proposed, having the vehicle logo assembly described above.

### Brief Description of the Drawings

The present application is expounded further below with the aid of the accompanying drawings. In the drawings:
Fig. 1 shows schematically an exploded view of the vehicle logo assembly according to the present application;
Fig. 2 shows schematically a top view of the vehicle logo assembly according to the present application;
Fig. 3 shows a partial sectional view of the lens of the vehicle logo assembly along section line A-A in Fig. 2.

### Detailed Description

Embodiments of the present application are explained demonstratively below. As those skilled in the art should realize, the embodiments explained may be amended in various ways without departing from the concept of the present application. Thus, the accompanying drawings and the Description are in essence demonstrative and non-limiting. In the following text, identical drawing reference labels generally indicate functionally identical or similar elements.

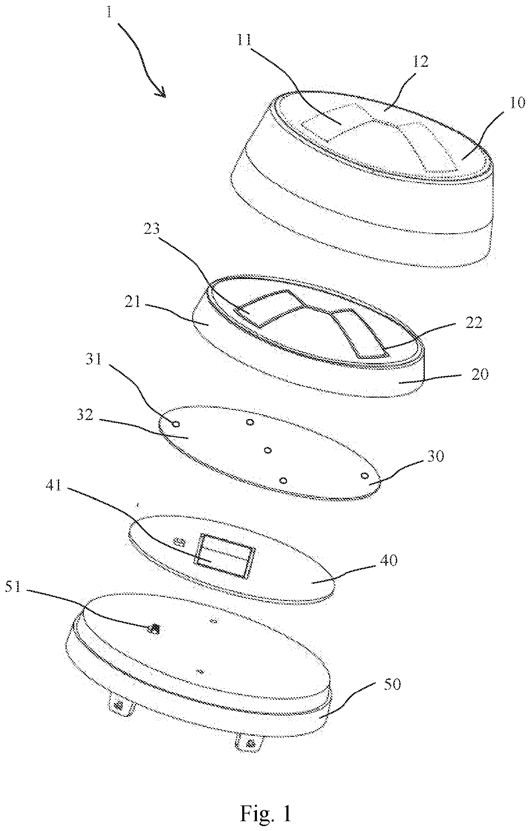

Fig. 1 shows schematically an exploded view of the vehicle logo assembly according to the present application. The vehicle logo assembly 1 mainly comprises a lens 2, a circuit board assembly 30 and a support 50, which are stacked in an assembled state. A vehicle logo pattern is provided in the lens 2. The circuit board assembly comprises a light source 31 and a printed circuit board 32 accommodating the light source, the circuit board assembly is arranged in a space enclosed by the lens 2 and the support 50, and mounted on the support 50.

The light source 31 may be an LED light source, e.g. a white LED or an LED of other color. Here, multiple light sources may be arranged on the printed circuit board. For lighting up the light source, a driver 41 is provided, being connected to an on-board power supply.

To facilitate the dissipation of heat from the light source, the vehicle logo assembly additionally has a heat sink 40, which is arranged between the printed circuit board and the support. Here, the light source is alternatively arranged on the heat sink 40 directly; this further facilitates heat dissipation.

A recess( not shown) for accommodating the driver 41 may be provided in the support 50, in order to achieve as compact a structure as possible. A through-hole 51 for electrically conductive components is also provided in the support 50.

Optionally, a light diffusing element, not shown, may be arranged between the light source and the lens, in order to achieve a uniform light output effect in all directions. The light diffusing element may be formed of a light-transmitting plastic matrix and diffusing particles mixed in the matrix. For example, the light diffusing element is a PC diffusing plate, the required transmittance of which can be achieved by selecting the content of diffusing particles therein. In general, a smaller number of diffusing particles results in higher transmittance and lower haze, whereas a higher content of diffusing particles results in lower transmittance and higher haze.

The lens 2 comprises an outer lens 10 and an inner lens 20, which are both made of a plastic with high light transmission, wherein the course of an inside surface of the outer lens is matched to the course of an outside surface of the inner lens, thereby ensuring a close fit between the outer lens 10 and inner lens 20. Here, the vehicle logo pattern is achieved through corresponding structural processing of the inside surface of the outer lens 10 and the outside surface of the inner lens 20; this will be expounded in detail below.

The outer lens 10 shown in Fig. 1 substantially takes the form of a shroud and has a light output side 12, with an opening thereof being covered by the support 50. Alternatively, the support 50 may be basin-shaped, having a recess for accommodating other elements of the vehicle logo; here, the outer lens 10 may take the form of a plate. A first coating 13 is applied to that side of the outer lens 10 which faces the inner lens 20, i.e. that side which is opposite the light output side 12, wherein the first coating 13 does not cover the whole inner side of the outer lens 10, i.e. the inner side of the outer lens 10 has an uncoated part, as shown schematically by the dotted-line region in Fig. 1; here, the uncoated region takes the form of a combined pattern of an approximate V-shape and a ring shape. Light cannot pass through the first coating 13, which is a paint layer, such as black paint or a paint layer of another color. Thus, light can pass out through the uncoated part.

A second coating 23 is applied to that side of the inner lens 20 which faces the outer lens 10. The course of an outer contour of the second coating is matched to the course of an outer contour of the uncoated part of the outer lens 10, but a gap exists between the adjacent outer contours. Light is likewise unable to pass through the second coating 23. The combined pattern of an approximate V-shape and a ring shape can be seen in Fig. 1.

In an assembled state of the outer lens 10 and inner lens 20, a light-transmitting part 24 in the form of the vehicle logo pattern is formed between the first coating 13 and the second coating 23.

In order that the vehicle logo pattern can present a good metallic texture and have good electrical, thermal and corrosion-resistant properties, the second coating 23 may be an electroplated layer, in particular a water-electroplated layer. Compared with vacuum plating, which involves a complex technological procedure and high environmental and equipment requirements, water electroplating is more cost-effective.

The second coating 23 is preferably a metal plated layer, e.g. a metal plated layer formed by water electroplating, such as a chromium layer or aluminum layer. In the case of a chromium layer, trivalent chromium is preferred, in order to meet environmental protection requirements. Depending on needs, the metal plated layer is for example high-gloss silver-colored, dull silver-colored, grey-silver-colored, gunmetal-colored, gold-colored, black-chrome-colored, semi-gloss chrome, etc.

Here, in order to guarantee good light transmission and good second coating adhesion, the inner lens 20 is be formed of a two-component material by injection molding; for example, that region of the inner lens which is coated with the second coating 23 is formed of ABS or a mixture of ABS and PC. Other regions of the inner lens are formed of PC, PMMA or other suitable light-transmitting material. Especially in the case that the outer lens and the other regions of the inner lens are formed of PC, as PC has approximately the same linear expansion coefficient as ABS, it is possible to ensure that the lens as a whole is substantially not adversely affected by temperature while guaranteeing good light transmission and a good coating effect.

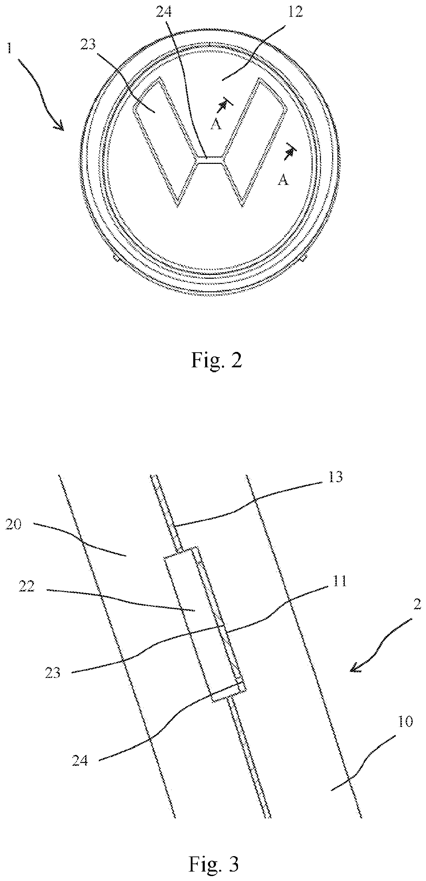

Preferably, referring to Fig. 3, a depression 11 is formed on that side of the outer lens 10 which faces the inner lens 20, with the first coating 13 being applied in a region other than the depression 11. A protrusion 22 is formed on that side of the inner lens 20 which faces the outer lens 10, with the second coating 23 being applied to a surface of the protrusion 22. The depression 11 and protrusion 22 are shape-fitted to each other, and the inner lens and outer lens are in a close fit. The protrusion 22 may be formed of the abovementioned material which has good adhesion to the second coating. In this design solution, through the fitting of the corresponding depression and protrusion of the outer lens and inner lens, it is possible to achieve precise positioning of the outer lens and inner lens relative to each other. Here, the outer contour of the second coating 23 is separated from an edge of the protrusion 22 by a predetermined gap, which forms the light-transmitting part 24.

In order to apply the first coating 13, a mold can be inserted into the depression 11 of the outer lens 10; here, a portion of the mold that is inserted into the depression 11 has an outer contour precisely matches with an inner contour of the depression, so as to prevent a coating material from undesirably entering a wall part forming the depression during the coating process. It is appropriate for the first coating 13 to gradually become thinner in a direction toward the depression 11, and the thinnest region thereof should satisfy the minimum thickness for the condition that light cannot pass through.

In order to apply the second coating 23, in particular in order to form the light-transmitting part 24, that region of the inner lens which does not need to be coated may for example be stuck with adhesive paper. When coating is complete, the corresponding adhesive paper may be removed.

The thicknesses of the first coating and second coating are 8 - 10µm. A top view of the assembled vehicle logo assembly can be seen in Fig. 2. When the light source is energized, light can be transmitted out through the light-transmitting part 24 located at the periphery of the second coating, and thereby present the desired display effect. Preferably, the second coating 23 on the inner lens can have an obvious color difference relative to the first coating 13 on the outer lens, e.g. the second coating is a high-gloss silver-colored coating, and the first coating is a black paint layer, thereby achieving exceptionally prominent display of the vehicle logo pattern. Of course, other coating colors can also be set as required.

The present application further relates to a vehicle having the vehicle logo assembly described above.

The present application is not limited to the structure described above; various other variants could also be used. Although the present application has already been described by means of a limited number of embodiments, those skilled in the art could, drawing benefit from this disclosure, design other embodiments which do not depart from the scope of protection of the present application disclosed herein. Thus, the scope of protection of the present application should be defined by the attached claims alone.

## Claims

1. A vehicle logo assembly (1), having a lens (2), a light source (31) and a support (50), the light source being arranged in a space enclosed by the lens (2) and the support (50), and a vehicle logo pattern being formed in the lens (2), **characterized in that** the lens (2) comprises an outer lens (10) and an inner lens (20) superposed one on top of the other, a first coating (13) is applied to that side of the outer lens (10) which faces the inner lens (20), a second coating (23) is applied to that side of the inner lens (20) which faces the outer lens (10), and in an assembled state of the outer lens (10) and inner lens (20), a light-transmitting part (24) in the form of the vehicle logo pattern is formed between the first coating (13) and the second coating (23), a depression (11) is formed on that side of the outer lens (10) which faces the inner lens (20), with the first coating (13) being applied in a region other than the depression (11); and a protrusion (22) is formed on that side of the inner lens (20) which faces the outer lens (10), with the second coating (23) being applied to a surface of the protrusion (22), wherein the depression (11) and the protrusion (22) are shape-fitted to each other, and the inner lens and the outer lens are in a close fit,
**characterized in that** the first coating (13) is a paint layer, the second coating (23) is a water-electroplated layer and **in that** the inner lens (20) is a two-component injection-molded member, wherein a portion that forms the protrusion (22) of the inner lens (20) is formed of acrylonitrile butadiene styrene copolymer (ABS) or a mixture of ABS and polycarbonate (PC), and other portions are formed of PC or polymethyl methacrylate (PMMA).

2. The vehicle logo assembly (1) as claimed in claim 1, **characterized in that** the second coating (23) is a metal coating.

3. The vehicle logo assembly (1) as claimed in claim 1, **characterized in that** the first coating (13) gradually becomes thinner in a direction toward the depression (11).

4. The vehicle logo assembly (1) as claimed in claim 1, **characterized in that** a light diffusion plate is arranged between the light source (31) and the lens (2).

5. The vehicle logo assembly (1) as claimed in claim 1, **characterized in that** the vehicle logo assembly (1) further comprises multiple light sources (31), being arranged on a common printed circuit board (32).

6. The vehicle logo assembly (1) as claimed in claim 1, **characterized in that** the vehicle logo assembly (1) further comprises a heat sink (40) for the light source (31).

7. The vehicle logo assembly (1) as claimed in claim 1, **characterized in that** the thicknesses of the first coating and the second coating are 8 - 10 µm.

8. A vehicle, having the vehicle logo assembly (1) as claimed in any one of the preceding claims.

## Patentansprüche

1. Fahrzeuglogoanordnung (1) mit einer Scheibe (2), einer Lichtquelle (31) und einem Träger (50), wobei die Lichtquelle in einem Raum angeordnet ist, der von der Scheibe (2) und dem Träger (50) umschlossen ist, und ein Fahrzeuglogomuster in der Scheibe (2) gebildet ist, **dadurch gekennzeichnet, dass** die Scheibe (2) eine äußere Scheibe (10) und eine innere Scheibe (20) umfasst, die übereinander liegen, wobei eine erste Beschichtung (13) auf jene Seite der äußeren Scheibe (10) aufgebracht ist, die zu der inneren Scheibe (20) weist, eine zweite Beschichtung (23) auf jene Seite der inneren Scheibe (20) aufgebracht ist, die zu der äußeren Scheibe (10) weist, und im montierten Zustand der äußeren Scheibe (10) und der inneren Scheibe (20) ein lichtdurchlässiges Teil (24) in Form des Fahrzeuglogomusters zwischen der ersten Beschichtung (13) und der zweiten Beschichtung (23) gebildet wird, eine Vertiefung (11) auf jener Seite der äußeren Scheibe (10) gebildet ist, die zu der inneren Scheibe (20) weist, wobei die erste Beschichtung (13) in einer anderen Region als der Vertiefung (11) aufgebracht ist; und ein Vorsprung (22) auf jener Seite der inneren Scheibe (20) gebildet ist, der zu der äußeren Scheibe (10) weist, wobei die zweite Beschichtung (23) auf eine Oberfläche des Vorsprungs (22) aufgebracht ist, wobei die Vertiefung (11) und der Vorsprung (22) formlich zueinander passen und die innere Scheibe und die äußere Scheibe in enger Passung sind,
**dadurch gekennzeichnet, dass** die erste Beschichtung (13) eine Farbschicht ist, die zweite Beschichtung (23) eine wasser-galvanische Schicht ist, und dass die innere Scheibe (20) ein spritzgegossenes Zweikomponentenelement ist, wobei ein Abschnitt, der den Vorsprung (22) der inneren Scheibe (20) bildet, aus Acrylnitril-Butadien-Styrol-Copolymer (ABS) oder einer Mischung aus ABS und Polycarbonat (PC) gebildet ist, und andere Abschnitte aus PC oder Polymethylmethacrylat (PMMA) gebildet sind.

2. Fahrzeuglogoanordnung (1) nach Anspruch 1, **dadurch gekennzeichnet, dass** die zweite Beschichtung (23) eine Metallbeschichtung ist.

3. Fahrzeuglogoanordnung (1) nach Anspruch 1, **dadurch gekennzeichnet, dass** die erste Beschichtung (13) allmählich in einer Richtung zu der Vertiefung (11) hin dünner wird.

4. Fahrzeuglogoanordnung (1) nach Anspruch 1, **dadurch gekennzeichnet, dass** eine Lichtstreuplatte zwischen der Lichtquelle (31) und der Scheibe (2) angeordnet ist.

5. Fahrzeuglogoanordnung (1) nach Anspruch 1, **dadurch gekennzeichnet, dass** die Fahrzeuglogoanordnung (1) des Weiteren mehrere Lichtquellen (31) umfasst, die auf einer gemeinsamen gedruckten Leiterplatte (32) angeordnet sind.

6. Fahrzeuglogoanordnung (1) nach Anspruch 1, **dadurch gekennzeichnet, dass** die Fahrzeuglogoanordnung (1) des Weiteren eine Wärmesenke (40) für die Lichtquelle (31) umfasst.

7. Fahrzeuglogoanordnung (1) nach Anspruch 1, **dadurch gekennzeichnet, dass** die Dicken von der ersten Beschichtung und der zweiten Beschichtung 8 - 10 µm betragen.

8. Fahrzeug mit der Fahrzeuglogoanordnung (1) nach einem der vorhergehenden Ansprüche.

## Revendications

1. Ensemble de logo de véhicule (1), comportant une glace (2), une source de lumière (31) et un support (50), la source de lumière étant agencée dans un espace délimité par la glace (2) et le support (50), et un motif de logo de véhicule étant formé dans la glace (2), **caractérisé en ce que** la glace (2) comprend une glace extérieure (10) et une glace intérieure (20) superposées l'une sur l'autre, un premier revêtement (13) est appliqué sur le côté de la glace extérieure (10) qui fait face à la glace intérieure (20), un second revêtement (23) est appliqué sur le côté de la glace intérieure (20) qui fait face à la glace extérieure (10), et à l'état assemblé de la glace extérieure (10) et de la glace intérieure (20), une partie transmettant la lumière (24) sous la forme du motif du logo du véhicule est formée entre le premier revêtement (13) et le second revêtement (23), une dépression (11) est formée sur le côté de la glace extérieure (10) qui fait face à la glace intérieure (20), le premier revêtement (13) étant appliqué dans une région autre que la dépression (11) ; et une protubérance (22) est formée sur le côté de la glace intérieure (20) qui fait face à la glace extérieure (10), le second revêtement (23) étant appliqué sur une surface de la protubérance (22), la dépression (11) et la protubérance (22) étant ajustées l'une à l'autre et la glace intérieure et la glace extérieure étant ajustées l'une à l'autre,
**caractérisé en ce que** le premier revêtement (13) est une couche de peinture, le second revêtement (23) est une couche électrodéposée à l'eau et **en ce que** la glace intérieure (20) est un élément moulé par injection à deux composants, une partie formant la protubérance (22) de la glace intérieure (20) étant formée d'un copolymère acrylonitrile-butadiène-styrène (ABS) ou d'un mélange d'ABS et de polycarbonate (PC), et d'autres parties étant formées de PC ou de polyméthacrylate de méthyle (PMMA).

2. Ensemble de logo de véhicule (1) selon la revendication 1, **caractérisé en ce que** le second revêtement (23) est un revêtement métallique.

3. Ensemble logo de véhicule (1) selon la revendication 1, **caractérisé en ce que** le premier revêtement (13) s'amincit progressivement en direction de la dépression (11).

4. Ensemble de logo de véhicule (1) selon la revendication 1, **caractérisé en ce qu'**une plaque de diffusion de la lumière est agencée entre la source de lumière (31) et la glace (2).

5. Ensemble de logo de véhicule (1) selon la revendication 1, **caractérisé en ce que** l'ensemble de logo de véhicule (1) comprend en outre de multiples sources de lumière (31), qui sont agencées sur une carte de circuit imprimé commune (32).

6. Ensemble de logo de véhicule (1) selon la revendication 1, **caractérisé en ce que** l'ensemble de logo de véhicule (1) comprend en outre un dissipateur thermique (40) pour la source de lumière (31).

7. Ensemble de logo de véhicule (1) selon la revendication 1, **caractérisé en ce que** les épaisseurs du premier revêtement et du deuxième revêtement sont de 8 à 10 um.

8. Véhicule, comportant l'ensemble logo de véhicule (1) selon l'une quelconque des revendications précédentes.
